# EUROPEAN PATENT APPLICATION

(11) **EP 2 254 060 A1**
(43) Date of publication of application: **24.11.2010**
(21) Application number: 09160588.1
(22) Date of filing: 19.05.2009
(51) Int. Cl.: G06F 17/30

(54) **Method for saving and restoring data from a product plant**

(71) Applicant: Siemens Aktiengesellschaft, 80333 München (DE)
(72) Inventor: Copello, Paolo, 16035, Rapallo (IT); Raviola, Alessandro, 16156, Genova (IT)
(74) Representative: Capré, Didier

(57) **Abstract**

Method for saving, and restoring data from a product plant, the product plant comprising a Manufacturing Executing System (MES), and a database containing a pluralities of historical data tables concerning production requests, the method comprising, the steps of:
a) connecting the MES system to the database, browsing the whole hierarchical database tables structure and selecting the data records having a completion date minor or equal to an input reference date,
b) performing a complete de-normalization of all the selected data records,
c) copying each de-normalized selected data records into new temporary database tables,
d) saving the de-normalised data records into a plurality of backup files.

## Description

The present invention relates to a method for saving and restoring data from a product plant in order to provide relevant data for analysis.

As it is well known, a method for scheduling manufacturing processes planned by an Enterprise Resource Planning (ERP) and produced by a plant floor, provides a Manufacturing Executing System (MES) for scheduling and implementing the scheduled manufacturing processes and controlling the corresponding production steps at plant floor.

In particular, the Enterprise Resource Planning (ERP) is a system including hardware devices and corresponding software applications for planning the business resources of an enterprise, i.e. material provisions, human resource managements, purchasing, orders, profits, finance, inventory controls, customer managements, etceteras, while the term "plant floor" has been used to indicate a system supporting the control of single machines involved in the manufacturing processes, for example by measuring the number of pieces produced per hour by each machine or the functioning parameters thereof, the quality of the pieces produced and so on.

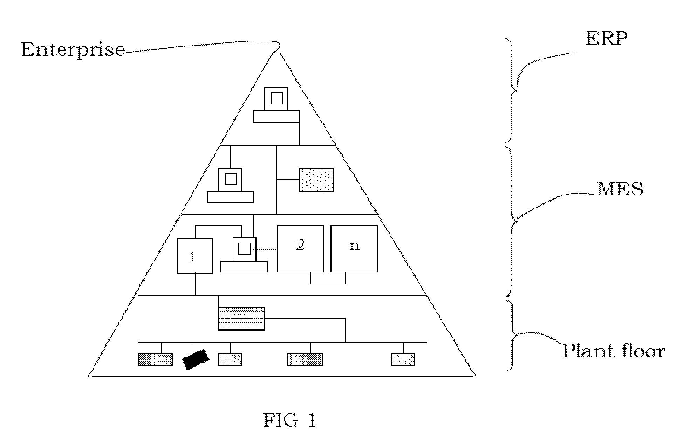

As schematically represented in figure 1, MES is an intermediate layer providing computing machines and software tools 1-n between the ERP upper layer and the shop floor lower layer, including a software tool for production order management 1, which receives requests of production from the ERP, and a software tool for production modeling 2, which supports the phases of selecting and managing the resources to be involved in the manufacturing processes, i.e. employees, machines and materials, in order to realize a planned manufacturing process within required time constrains.

The production process usually consists of production requests which are divided into segment requirements that represent simple actions that can be controlled by the MES system. Every segment consists of many requirements concerning the equipment involved in the production process, the raw materials that should be used and also the personnel who should be in charge of the various production activities. All the data concerning the segment requirements are stored in an online database in order to, for example, find the causes for frequent machine stoppages, determine production costs or reduce losses.This leads to collect a large amount of data that are stored in the MES system's online database.

The production process is executed according to a life cycle consisting of different status that defines all the steps that the process should go through. The completion of the production process puts all the production requests and all the segment requirements in a "completed" status according to that life cycle and, at this stage the process is no more involved in any MES activity. However, all data related to segment requirements and production requests are stored in the MES system's database as "historical" information that are kept online for tracking purposes only. The moment or date of completion of each segment requirement is also stored in the historical database. This leads to store a large amount of data that increases MES system's database size with a lot of data that are not necessary for the production activities. This use of memory also leads to decreasing performances of the whole system.

Furthermore, the only way to backup data for any "historical" productive process is through a database backup procedure that dumps all the tables' content into proprietary binary files. In the same way, the database content can be restored only starting from such backup files. Usually, the MES user schedules database backup/restore jobs with no chance to integrate and/or synchronize them with all the ordinary MES system activities.

Moreover, the MES system has no control over the backup execution because the information is not processed and every relationship between database entities (i.e.: production requests and segment requirements) is kept as it is (i.e.: primary keys values and/or foreign keys values). Therefore, the restore procedure is quite dangerous since duplicate keys values errors might occur while trying to load data back, from such backup file, into the online tables.

It is therefore an objective of the present invention to provide a method for a reliable backup procedure of historical data in order to reduce online database size when those data are no more needed for the production itself, and in order to allow deleting those data from online tables and to preserve the overall performance level of the system.

It is another objective of the present invention to provide a method allowing the MES system user to restore historical data without interfering with the online data related to the production requests and segment requirements that have been created right after the corresponding backup.

This object is achieved according to the present invention by a method for saving, and restoring data from a product plant, the product plan comprising a Manufacturing Executing System (MES), and a database containing a pluralities of historical data tables concerning production requests, the method comprising, the steps of:
- a) connecting the MES system to the database, browsing the whole hierarchical database tables structure and selecting the data records having a completion date minor or equal to an input reference date,
- b) performing a complete de-normalization of all the selected data records,

- c) copying each de-normalized selected data record into new temporary database tables,
- d) saving the de-normalised data records into a plurality of backup files.

This new method provides the user with backup-restore capabilities that are unavailable with database management systems which usually are not properly tailored to MES activities. In fact, one important feature is the possibility to choose a reference date. All the production requests that have been completed earlier than this date can be backed up while the other ones can be ignored. Now, saving and restoring historical productive processes information is possible within the MES system and these operations can be synchronized with the ordinary MES activities to satisfy the user needs all along the productive process execution.

According to one embodiment, performing a complete de-normalization comprises:
- for each selected data record, turning foreign keys values into the minimum set of fields that are necessary to uniquely identify its master entities.

The de-normalized hierarchical structure of the saved data records makes the use of reporting tools easier since all the relationships between entities are now explicit and the MES user is provided with more readable results.

According to one embodiment, the de-normalisation step is performed by joining master-detail tables of the first database while the selecting step is realized.

According to another embodiment, saving the de-normalised data records comprises creating a plurality of files, each file receiving the content of a corresponding new temporary table.

A preferred embodiment of the present invention may provide that the data are saved in the form of a comma-separated-values row. The comma-separated-values backup file is a format that allows easy processing of the contained data even without restoring them into the database.

According to the invention, the method may further comprise:
- providing the MES system with the local or remote file system path where the backup files are stored,
- reading such files and loading specific historical database tables,
- turning each comma-separated-values row into a new history table record,
- generating a new primary key value for each record keeping the tables hierarchy consistent and fully browsable.

Thanks to these steps there is no conflict between the restored information and the online data of the productive processes that are still working. In fact, the restored data are now loaded into properly designed database tables, therefore no duplicate primary keys values insertion errors can occur.

According to another embodiment, after the selecting step, the selected data are deleted from the online database and from the new temporary database.

The database size can then be significantly reduced since backed up data are deleted from online tables enhancing the whole system's performances; besides, thanks to the ability to save backup files on remote computer, the MES system disk space can also be kept under control.

In an other aspect the invention concerns a computer readable memory having encoded thereon a program for saving and restoring data from a product plant, the product plant comprising a Manufacturing Executing System (MES), and a database containing a pluralities of historical data tables concerning production requests, **characterized in that** said program includes:
a) code for connecting the MES system to the database, browsing the whole hierarchical database tables structure and selecting the data records having a completion date minor or equal to an input reference date,
b) code for performing a complete de-normalization of all the selected data records,
c) code for copying each de-normalized selected data records into new temporary database tables, and
d) code for saving the de-normalised data records into a plurality of backup files.

The method of operation of the invention, together with additional objects and advantages thereof will be best understood from the following description of a specific embodiment when read in connection with the accompanying drawings wherein:
- figure 1 already described schematically represents an architecture for managing and controlling manufacturing processes, according to the prior art,
- figure 2 is a flowchart showing the different steps of the method according to the invention,
- figure 3 is an extract from an equipment requirement table containing data to be backed up,
- figure 4 is an extract from a de-normalized equipment requirement table.

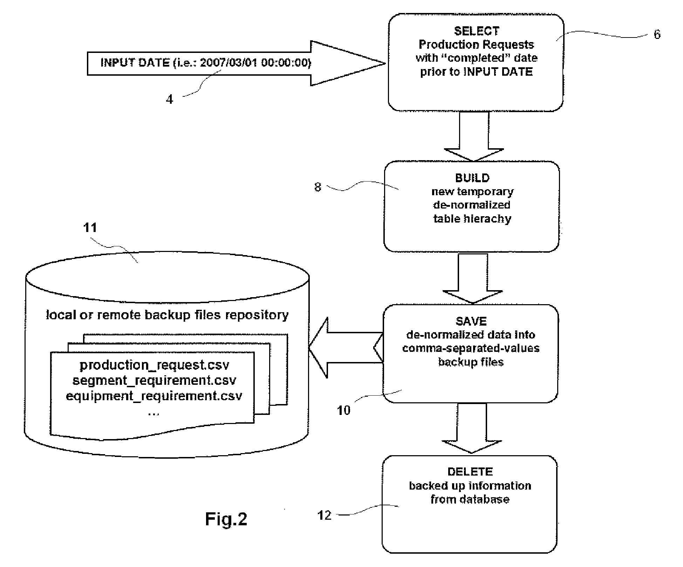

Figure 2 is a flowchart of the backup operation showing the different steps of the method according to the invention.

At step 4, a user provides an input reference date to the MES system to perform a productive processes backup operation. At step 6, the MES system connects to the online database and selects the data records in a production request table which have a completed date minor or equal to such input date.

Then, at step 8, browsing the whole hierarchical online database tables' structure, the MES system copies all the selected data records related to such production requests which are in the online database into new temporary database tables performing a complete "de-normalization" as a preparatory step to the actual backup execution.

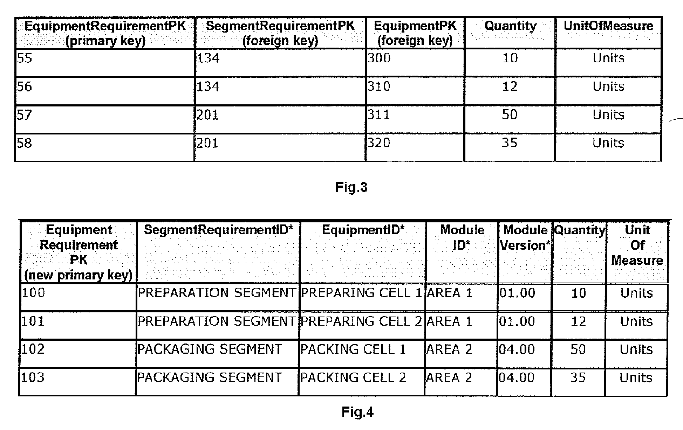

This de-normalisation procedure regards the online tables containing information about production request, segment requirement and, for every segment, all the equipment/material-consumed/material-produced/personnel requirements, the execution equipment and all the other sub-entities. With this approach, master-detail relationships are expanded so that, for every detailed entity (i.e.: equipment requirements), foreign keys values are turned into the minimum set of fields that are necessary to uniquely identify its master entities. For example, as can be seen on figure 3 which depicts an extract from the Equipment Requirement table containing data to be backed up and on figure 4 which depicts an extract from the de-normalized Equipment Requirement table, Segment Requirement foreign key turns into Segment-Requirement-ID, Equipment foreign key turns into Equipment-ID, Module-ID and Module-Version. The MES system performs these de-normalisation operations in the database joining master-detail tables while selecting the records that are to be copied into the temporary tables.

At step 10, the productive processes information contained in the de-normalized temporary tables are saved into comma-separated-values files. A local or remote backup file 11 is created for each de-normalized table in order to maintain the same hierarchical structure of the Production Request (i.e.: segment_requirement.csv file refers to the Segment Requirement database table etc.).For example, in one embodiment, the content of each de-normalized table record is saved into a comma-separated-values row inside a single file. Such files can be stored either on the computer where the MES system is installed or on any other networked computer and they are collected inside folders whose names univocally identify date and time of the backup operation.

At step 12, the productive process information is deleted from the online database and from the de-normalized temporary tables.

When the "historical" information of productive processes is needed back into the database for reporting purposes, the restore procedure can be performed as follows.

The user provides the MES system with the local or remote file system path where the preferred backup files are stored, the system reads such files and loads specific history database tables (i.e.: HistoryProductionRequest, HistorySegmentRequirement etc.). Then, the MES System turns every comma-separated-values row into a new history table record. Meanwhile, new primary keys values are generated for each record keeping the tables hierarchy consistent and fully browsable. The final result is a completely new restored production request information structure. In this way, the online data are not mixed with the restored data.

## Claims

1. Method for saving, and restoring data from a product plant, the product plant comprising a Manufacturing Executing System (MES), and a database containing a pluralities of historical data tables concerning production requests, the method comprising, the steps of:
a) connecting the MES system to the database, browsing the whole hierarchical database tables structure and selecting the data records having a completion date minor or equal to an input reference date,
b) performing a complete de-normalization of all the selected data records,
c) copying each de-normalized selected data records into new temporary database tables,
d) saving the de-normalised data records into a plurality of backup files.

2. Method according to claim 1 wherein performing a complete de-normalization comprises:
- for each selected data record, turning foreign keys values into the minimum set of fields that are necessary to uniquely identify its master entities.

3. Method according to claim 1 or 2 wherein the de-normalisation step is performed by joining master-detail tables of the database while the selecting step is realized.

4. Method according to claims 1 to 3 wherein saving the de-normalised data comprising creating a plurality of files, each file receiving the content of a corresponding new temporary database table.

5. Method according to claim 4 wherein the data are saved in the form of a comma-separated-values row.

6. Method according to claim 5 further comprising :
- providing the MES system with the local or remote file system path where the backup files are stored,
- reading such files and loading specific historical database tables,
- turning every comma-separated-values row into a new history table record,
- generating a new primary key value for each record, keeping the tables hierarchy consistent and fully browsable.

7. Method according anyone of the previous claims wherein after the selection step, the selected data are deleted from the online database and from the new temporary database.

8. A computer readable memory having encoded thereon a program for saving and restoring data from a product plant, the product plant comprising a Manufacturing Executing System (MES), and a database containing a plurality of historical data tables concerning production requests, **characterized in that** said program includes:
a) code for connecting the MES system to the database, browsing the whole hierarchical database tables structure and selecting the data records having a completion date minor or equal to an input reference date,
b) code for performing a complete de-normalization of all the selected data records,
c) code for copying each de-normalized selected data records into new temporary database tables, and
d) code for saving the de-normalised data records into a plurality of backup files.
